# EUROPEAN PATENT SPECIFICATION

(11) **EP 3 306 737 B1**
(45) Date of publication and mention of the grant of the patent: **15.05.2019**
(21) Application number: 15898530.9
(22) Date of filing: 20.07.2015
(51) Int. Cl.: H01M 10/613, H01M 10/6569, H01M 10/6567, H01M 10/656

(54) **BATTERY PACK AND BATTERY PACK SYSTEM**
BATTERIEPACK UND BATTERIEPACKSYSTEM
BLOC-BATTERIE ET SYSTÈME DE BLOC-BATTERIE

(43) Date of publication of application: 11.04.2018
(73) Proprietor: Microvast Power Systems Co., Ltd., Huzhou, Zhejiang 313000 (CN)
(72) Inventor: LI, Xiang, Hu Zhou Zhejiang 313000 (CN); TONG, ZhiMing, Hu Zhou Zhejiang 313000 (CN); LI, Hui, Hu Zhou Zhejiang 313000 (CN); FU, LingYan, Hu Zhou Zhejiang 313000 (CN)
(74) Representative: Haseltine Lake LLP
(86) International application number: PCT/CN2015/084457
(87) International publication number: WO 2017/011974

(56) References cited:
- CN-A- 101 647 149
- CN-A- 103 985 921
- CN-U- 202 662 693
- US-A1- 2011 200 856
- US-A1- 2014 342 201

## Description

### TECHNICAL FIELD

The present application relates to a battery pack including lithium ion battery and a battery pack system having the battery pack.

### BACKGROUND

The power system of an energy storage/electric vehicle consists of a plurality of battery modules, and the battery module consists of a plurality of battery cells. The battery cells in the battery module are arranged very closely in order to pursuit the energy density of the battery module. As a result, it is easy to accumulate heat in the battery module, especially in the middle of the battery module, where the temperature is generally higher than other positions. Once the heat of particular battery cells in the battery module is accumulated to a certain extent, it may lead to thermal runaway. Further, the thermal runaway will propagate in the battery module to cause the temperature of other normal battery cells to rise rapidly, thereby leading to thermal runaway of the whole battery module. This is extremely dangerous, especially in the hermetically-sealed battery box.

Chinese application No. CN201280043177.9, entitled "fire extinguishing apparatus for battery pack" discloses an apparatus for extinguishing a battery-pack fire upon the occurrence of a fire in the battery pack. The fire extinguishing apparatus includes a fire detecting sensor for sensing whether or not the battery pack is on fire; a fire extinguishing agent storage tank which stores a fire extinguishing agent in an interior space therein; and a control unit which causes the fire extinguishing agent in the fire extinguishing agent storage tank to be injected into the battery pack upon the sensing of the occurrence of a fire by the fire detecting sensor.

The fire detecting sensor in the application is used for sensing whether or not the battery pack is on fire, it is proved that the fire extinguishing apparatus starts work only when open flame occurs. In fact, the early stage of thermal runaway shows with smoking and temperature rising of the battery cell having obvious symptom. Once thermal runaway occurs in a particular battery cell, it will generate heat continuously to heat up neighboring battery cells above the critical temperature of thermal runaway, to thereby bring these normal battery cells into thermal runaway. This phenomenon will propagate rapidly and generate heat continuously, until other neighboring battery cells are heated up to the state of thermal runaway.

Chinese application No. CN201410186474.X, entitled "high water-resistant thermal-insulation battery box for electric vehicle" discloses a battery box which includes a sealed box, a plurality of battery cells in the box and a radiator arranged in the box and connected with the battery cells. Each battery cell is provided with a heating device, and a controller connected with the heating devices through a control circuit is arranged in the box. It is also provided with hollow radiating panels for heat radiation of each battery cell, so that uniform heat radiation of the battery cells is guaranteed, and heat dissipation efficiency is improved. The technical solution of the application can solve the problem of temperature uniformity among the battery cells during normal operation of the battery. However, due to the thermal conduction by the radiating panels, once thermal runaway happens in a particular battery cell, the heat will be transferred to the other normal battery cells rapidly to cause propagation of thermal runaway.

US publication No. US20100136391A1, entitled "active thermal runaway mitigation system for use within a battery pack" discloses a battery pack including a battery thermal runaway control system. The control system includes at least one fluid-containing conduit in proximity to the cells within the battery pack. The conduit includes a plurality of breach points in proximity to the subset of cells, where each breach point is configured to form a breach at a preset temperature that is lower than the melting temperature of the conduit. Once a breach is formed, the fluid contained within the conduit is discharged through the breach to cool the cells. The technical solution of the application can realize a certain temperature control when thermal runaway occurs in the cells. However, due to exposure of the cells in the air, when thermal runaway occurs in a particular cell, it may firstly cause open flames and occurrence of naked fire, and all of the combustible materials in the cells will react fully with the oxygen to generate a large amount of heat. Even if the fluid contained within the conduit is discharged through the breach of the conduit, the large amount of generated heat requires a large amount of the fluid, which seriously affects the thermal control effect. In the meantime, the flame produced by the naked fire may cause the neighboring cells to be ignited rapidly, resulting in happening of further thermal runaway.

Chinese application No. CN201220017950.1, entitled "safety battery pack" discloses a method of immersing battery cells in insulation sealing liquid. The method isolates the battery cells from the air. When thermal runaway occurs in a particular battery cell, the combustible gas ejected out from the battery cell firstly encounters the sealing liquid and is cooled down to thereby prevent occurrence of open flame and naked fire. A large amount of the combustible material in the battery cell is released in the form of smoke, greatly reducing the total amount of heat. Nevertheless, the heat generated by the battery cell in thermal runaway is still considerable, which may heat up the temperature at 400 Celsius degree or higher. For considering the limitation of weight and volume, the quantity of the insulation sealing liquid in each battery pack is usually very limited, it is hard to fully absorb or take away the generated heat, and it is unable to realize the function of controlling the battery temperature under the thermal runaway point. Thus, the heat will heat up the neighboring cells to above the thermal runaway point to induce thermal runaway of more battery cells, to cause happening of accelerated thermal runaway in the entire battery pack or battery system and finally lead to crashing of the battery system.

US 2011/0200856 A1 discloses a battery module. The battery module includes: a plurality of batteries; a housing 50 in which the plurality of batteries are aligned and stored; and a cooling pipe 70 provided along the plurality of batteries in the housing 50, the cooling pipe 70 being filled with a cooling medium, wherein the cooling pipe 70 is made of a material which melts when the temperature of the battery reaches or exceeds a predetermined temperature.

US 2014/0342201 A1 discloses a thermal management system for a high density power source. The system includes a housing with an interior divided into first and second compartments. The first compartment is configured and adapted to house at least one electrical battery and the second compartment defines a coolant reservoir. A fluid release member connects the first and second compartments. Upon the first compartment reaching a temperature in excess of a predetermined limit, the fluid release member releases coolant form the second compartment into the first compartment to cool the at least one battery within the first compartment.

### SUMMARY

The object of the present application is to provide a battery pack, which includes a battery box and a battery module. The battery module is disposed in the battery box. The battery module consists of a plurality of battery cells. The battery box is further filled with a filling liquid, and the battery module is at least partially immersed in the filling liquid. At least one cooling pipe is disposed in the battery box, and at least a portion of the cooling pipe is configured to melt and form a breach after reaching a preset temperature. The cooling pipe is filled with a coolant, and the latent heat of vaporization of the coolant is higher or equal to the latent heat of vaporization of the filling liquid.

By immersing the battery module in the filling liquid, it can avoid damage of external moisture to the battery module and prolong the service life of the battery module; further, the filling liquid helps to dissipate heat from the battery module to maintain uniform temperature inside the battery module. Once a thermal runaway happens to the battery cells, the filling liquid can effectively isolate air to avoid open flame and even fire, thereby greatly reducing the total heat generation.

The cooling pipe is disposed in the battery box, and the coolant is filled in the cooling pipe, which is helpful for dissipating heat from the battery module. The cooling pipe has at least a portion which is configured to melt and form a breach after reaching a preset temperature, such that a large amount of the coolant is discharged out rapidly from the breach of the cooling pipe and absorbs heat by temperature rise and/or phase change of the coolant, to control the temperature of the battery module under the thermal runaway temperature of the battery pack and effectively inhibit propagation of thermal runaway.

According to the object of the present application, the latent heat of vaporization of the coolant is higher or equal to the latent heat of vaporization of the filling liquid. Therefore, when thermal runaway occurs in a particular battery cell of the battery pack and the temperature reaches the vaporization temperature of the coolant, the coolant can absorb a large amount of heat by phase change to rapidly reduce the temperature under the thermal runaway temperature point after the thermal runaway occurs, to avoid further propagation of thermal runaway and accordingly prevent the entire battery system from breakdown.

Preferably, the preset temperature is lower than the thermal runaway temperature of the battery module.

According to the normal operation temperature range of the battery pack, the preset temperature is generally in the range from 70 to 150 Celsius degree; preferably, the preset temperature is in the range from 70 to 130 Celsius degree; more preferably, the preset temperature is 100 Celsius degree, or the preset temperature is 130 Celsius degree.

Under normal operation conditions of the battery module, the cooling pipe is used for cooling the battery module. When the battery module reaches the preset temperature due to thermal runaway at local areas, the cooling pipe is melt and forms a breach, and the coolant is discharged out from the breach of the cooling pipe. The coolant undergoes phase change and absorbs a large amount of heat, to effectively control propagation of thermal runaway.

According to an embodiment of the present application, a material of the portion of the cooling pipe, configured to melt and form a breach, is selected from an alloy with low melting point or a polymer with low melting point, wherein low melting point in the present application generally means a melting point below 200 Celsius degree.

In general, the above-mentioned polymer with low melting point is at least one selected from POE (copolymer of ethylene and butylene), EVA (copolymer of ethylene and acetic acid), ABS (acrylonitrile-butadiene-styrene copolymer), PU (polyurethane), PA (polyamide) and CPVC (chlorinated polyvinyl chloride).

The alloy with low melting point is at least one selected from Ga, In, Sn, Bi, Pb, Cd and Zn.

Preferably, the filling liquid contains an insulating and flame-retardant liquid having a freezing point lower than -30 Celsius degree and a decomposition temperature higher than 70 Celsius degree.

The filling liquid is a cooling liquid having insulating and flame-retardant properties, the freezing point is lower than -30 Celsius degree, and the decomposition temperature is higher than 70 Celsius degree.

According to an embodiment of the present application, the above-mentioned filling liquid contains an insulating and flame-retardant liquid having a freezing point lower than -30 Celsius degree and a boiling point higher than 70 Celsius degree.

Preferably, the filling liquid is at least one selected from silicone oil, transformer oil, chlorofluorocarbons, fluorohydrocarbon, chlorohydrocarbon and hydrofluoroether. The above materials for the filling liquid have preferable insulating property and preferable stability.

According to an embodiment of the present application, the phase-transition temperature of the coolant is in the range from 70 to 150 Celsius degree.

Preferably, the coolant is at least one selected from water and aqueous solution. Preferably, the aqueous solution is selected from aqueous solution of alcohol. Further, the alcohol is at least one selected from ethylene glycol, 1,2-ethylidene glycol, propylene glycol, 1,3-butanediol, hexalene glycol, diethylene glycol, and propanetriol. The above aqueous solutions can reduce the freezing point and improve the working performance at low temperature environment.

Preferably, the coolant is at least one selected from chlorofluorocarbons, fluorohydrocarbon, chlorohydrocarbon, and hydrofluoroether. The above materials for the coolant can be vaporized quickly and have preferable latent heat of vaporization to take away a sufficient amount of heat.

Preferably, the cooling pipe is at least partially immersed in the filling liquid.

In order to ensure the coolant can be discharged out from the cooling pipe smoothly to cool down the battery module after the cooling pipe is melt to form a breach, the hydraulic pressure of the coolant is higher than the hydraulic pressure of the filling liquid.

The cooling pipe can be a blind pipe having one end being sealed and the other end being open. Or, the cooling pipe can be a through pipe having two ends being open. When using a blind pipe, the coolant does not work during normal operation of the battery; once thermal runaway occurs, the coolant flows out from the cooling pipe for purpose of cooling down and controlling the propagation of thermal runaway. When using a through pipe, the coolant can further take the role to conduct heat through external circulation.

Preferably, the battery module is placed upside down in the battery box, such that the electrode tabs of the battery module are immersed in the filling liquid.

The battery module is placed upside down, which means the electrode tabs of the battery cells are disposed downwards, such that the electrode tabs can be immersed in the filling liquid when using a small amount of filling liquid. For a battery cell, the heat generation of the electrode tabs is relatively large. By using the filling liquid to dissipate heat from the electrode tabs, the heat dissipating effect is better, and it is helpful to insulate the battery module.

According to another embodiment of the present application, a heat conduction device is attached to an outer wall of the cooling pipe, such that the heat of the battery module can be transferred to the cooling pipe more easily. If thermal runaway happens to a particular battery cell, the heat conduction device can rapidly transfer the heat to the cooling pipe to cause the cooling pipe to melt and form a breach, whereby the coolant is discharged out to control the temperature of the battery module and inhibit the propagation of thermal runaway.

For pouch cells, the packing position of the electrode tabs is relatively easy to break, and the active materials inside the battery may leak out from the break. Placing the battery cells upside down is helpful to reduce the exposure time of leaked materials in the air. Once leakage happens, the active materials flow into the filling liquid quickly, thereby improving the safety of the battery.

According to the object of the present application, when thermal runaway occurs, the cooling pipe is melt to form a breach, the coolant flows into the battery box. When the temperature reaches the boiling point of the coolant, the coolant begins to undergo phase change and absorb heat, and the pressure in battery box will rise rapidly. In order for the coolant to undergoing phase change rapidly and absorbing more heat, and for the safety of the whole battery pack, the battery box is installed with a pressure relief valve, preferably, a one-way pressure relief valve, such that air generated due to phase change of the coolant can be discharged quickly after reaching a specific pressure, to thereby improve the safety performance.

Preferably, the battery box is provided with an outlet and an inlet, and two open ends of the cooling pipe are respectively connected to the outlet and the inlet.

The heat inside the battery box can be taken away as the coolant flows along the cooling pipe, to realize thermal management during normal operation of the battery. On the other hand, once thermal runaway occurs and the cooling pipe is melt to form a breach, a large amount of the coolant can enter from the inlet to cool down the battery module rapidly.

According to another embodiment of the present application, the outlet and the inlet are located above the liquid level of the filling liquid.

By setting the outlet and the inlet above the liquid level of the filling liquid, the filling liquid in the battery box is avoided to flow into the circulation system through the outlet after the cooling pipe is melt, and meanwhile, more coolant can be contained in battery box to facilitate cooling of the battery module.

As another preferable embodiment, the battery box is provided with an inlet, the open end of the cooling pipe is connected to the inlet, the cooling pipe is disposed in the battery box, and the other end of the cooling pipe is hermetically sealed.

In this way, the coolant in the cooling pipe does not circulate. However, after the cooling pipe is melt to form a breach, a large amount of the coolant is guided into the battery box from the storage tank to cool down the battery pack and prevent further propagation of thermal runaway.

The present application further provides a battery pack system which includes the above-mentioned battery pack. The battery pack system further includes a storage tank, and the storage tank is connected to the battery box through pipeline. The storage tank is filled with the coolant, and the storage tank is connected to the inlet, or to the outlet and the inlet through pipeline.

Due to the limitation of capacity of the cooling pipe, a large amount of the coolant can be stored in the storage tank. The coolant in the cooling pipe can circulate during normal operation to take away the heat of the filling liquid, for cooling down the battery pack. When thermal runaway is going to happen or has happened in the battery module, the demand for heat dissipating increases dramatically. The cooling pipe is melt to form a breach due to reaching the preset temperature, a large amount of the coolant enters into the battery box to cool down the battery module rapidly, to prevent propagation of thermal runaway.

According to an embodiment of the present application, the storage tank can connect to a plurality of (at least two) battery packs through pipeline. On the same electric vehicle, the possibility of thermal runaway in multiple battery packs at the same time is relatively small, if the particular battery pack having occurring thermal runaway is under control, it can avoid propagation of thermal runaway to other battery packs. Therefore, by sharing a storage tank between multiple battery packs can save the interior space of a vehicle, reduce the weight of whole battery pack system, improve the energy density of the whole battery pack system, and meanwhile, meet the demand for stopping propagation of thermal runaway.

As another preferable embodiment of the present application, when thermal runaway occurs in a single battery pack, the coolant is injected into the battery box from the storage tank. If the temperature in the battery box cannot be controlled quickly, the coolant in other normal battery boxes is also injected into the battery box to obtain a better effect of temperature control.

In accordance with the technical schemes provided by the present application, the temperature of the battery module is more uniform to thereby reduce local accumulation of temperature. When thermal runaway occurs locally, the filling liquid ensures no open flame generated firstly and the heat generation is reduced after the thermal runaway; in the meantime, the cooling pipe is melt to form a breach after absorbing heat to release the coolant. The coolant undergoes phase change to absorb heat and effectively control the temperature of the battery module, such that the temperature in the battery pack is under control to inhibit propagation of thermal runaway, whereby the loss is minimized. By sharing a storage tank between multiple battery packs can save the interior space of a vehicle, reduce the weight of whole battery pack system, improve the energy density of the whole battery pack system, and meanwhile, meet the demand for stopping propagation of thermal runaway.

### BRIEF DESCRIPTION OF THE DRAWINGS

FIG. 1 is a schematic view of embodiment 1, 2, 3 of the present application;
FIG. 2 is a schematic view of embodiment 4 of the present application;
FIG. 3 is a schematic view of embodiment 5, 6 of the present application;
FIG. 4 is a schematic view of embodiment 7 of the present application;
FIG. 5 is a schematic view of embodiment 8, 9 of the present application;
FIG. 6 is a schematic view of embodiment 7 of the present application;
FIG. 7 is a schematic view of embodiment 8, 9 of the present application;

battery box 1, cooling pipe 11, cooling pipe A 111, cooling pipe B 112, inlet 12, outlet 13, filling liquid 14, heat conduction device 15, battery module 2, storage tank 3.

### DETAILED DESCRIPTION OF PREFERRED EMBODIMENTS

### Embodiment 1

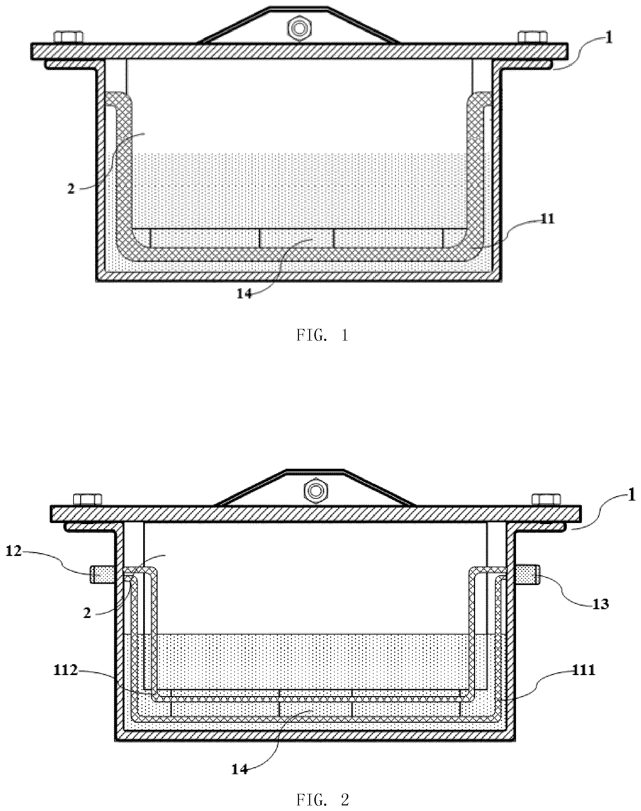

Referring to FIG. 1, the present application provides a battery pack which includes a battery box 1 and a battery module 2. The battery module 2 is disposed in the battery box 1. The battery box 1 is further filled with a filling liquid 14, and the battery module 2 is immersed in the filling liquid 14. The electrode tabs of battery cells are disposed downwards such that the electrode tabs of the battery module 2 are immersed into the filling liquid 14. The filling liquid 14 in the present embodiment is silicone oil.

A cooling pipe 11 is disposed in the battery box 1, and the cooling pipe 11 is filled with a coolant. The melting temperature of sidewall of the cooling pipe 11 is at a preset temperature, and the preset temperature is 70 Celsius degree. The cooling pipe 11 is used for cooling purpose during normal operation of the battery module 2. The coolant is water.

When thermal runaway happens in the battery module 2, local temperature rises rapidly, the cooling pipe 11 reaches the preset temperature and is melt to form a breach, a large amount of the coolant flows out from the breach to absorb heat by phase change and control the temperature rise of the battery module 2.

### Embodiment 2

Referring to FIG. 1, the present application provides a battery pack which includes a battery box 1 and a battery module 2. The battery module 2 is disposed in the battery box 1. The battery box 1 is further filled with a filling liquid 14, and the battery module 2 is immersed in the filling liquid 14. The electrode tabs of battery cells are disposed downwards such that the electrode tabs of the battery module 2 are immersed into the filling liquid 14. The filling liquid 14 in the present embodiment is silicone oil.

A cooling pipe 11 is disposed in the battery box 1, and the cooling pipe 11 is filled with a coolant. The melting temperature of sidewall of the cooling pipe 11 is at a preset temperature, and the preset temperature is 70 Celsius degree. The cooling pipe 11 is used for cooling purpose during normal operation of the battery module 2. The coolant is fluorohydrocarbon.

When thermal runaway happens in the battery module 2, local temperature rises rapidly, the cooling pipe 11 reaches the preset temperature and is melt to form a breach, a large amount of the coolant flows out from the breach to absorb heat by phase change and control the temperature rise of the battery module 2.

### Embodiment 3

Referring to FIG. 1, the present application provides a battery pack which includes a battery box 1 and a battery module 2. The battery module 2 is disposed in the battery box 1. The battery box 1 is further filled with a filling liquid 14, and the battery module 2 is immersed in the filling liquid 14. The electrode tabs of battery cells are disposed downwards such that the electrode tabs of the battery module 2 are immersed into the filling liquid 14. The filling liquid 14 in the present embodiment is hydrofluoroether.

A cooling pipe 11 is disposed in the battery box 1, and the cooling pipe 11 is filled with a coolant. The melting temperature of sidewall of the cooling pipe 11 is at a preset temperature, and the preset temperature is 100 Celsius degree. The cooling pipe 11 is used for cooling purpose during normal operation of the battery module 2. The coolant is ethylene glycol aqueous solution.

When thermal runaway happens in the battery module 2, local temperature rises rapidly, the cooling pipe 11 reaches the preset temperature and is melt to form a breach, a large amount of the coolant flows out from the breach to absorb heat by phase change and control the temperature rise of the battery module 2.

### Embodiment 4

Referring to FIG. 2, the present application provides a battery pack which includes a battery box 1 and a battery module 2. The battery module 2 is disposed in the battery box 1. The battery box 1 is further filled with a filling liquid 14, and the battery module 2 is immersed in the filling liquid 14. The electrode tabs of battery cells are disposed downwards such that the electrode tabs of the battery module 2 are immersed into the filling liquid 14. The filling liquid 14 in the present embodiment is silicone oil.

A cooling pipe A111 and a cooling pipe B112 are disposed in the battery box 1. The cooling pipe A111 and the cooling pipe B112 are filled with a coolant. The melting temperature of sidewalls of the cooling pipe A111 and the cooling pipe B112 is at a preset temperature, and the preset temperature is 130 Celsius degree. The cooling pipe 11 is used for cooling purpose during normal operation of the battery module 2.

The battery box 1 is provided with an outlet 13 and an inlet 12. The cooling pipe A111 and the cooling pipe B112 are respectively connected to the outlet 13 and the inlet 12. The coolant is circulated in the cooling pipe A111 and the cooling pipe B112 to take away the heat of the filling liquid 14 to avoid heat accumulation in the battery box1 to cause damage to the battery box 2. The coolant is stored in a storage tank located outside the battery box. The coolant is water.

When thermal runaway happens in the battery module 2, local temperature rises rapidly, the cooling pipe A111 and/or the cooling pipe B112 reaches the preset temperature and is melt to form a breach, a large amount of the coolant flows out from the breach to absorb heat by phase change and control the temperature rise of the battery module 2.

### Embodiment 5

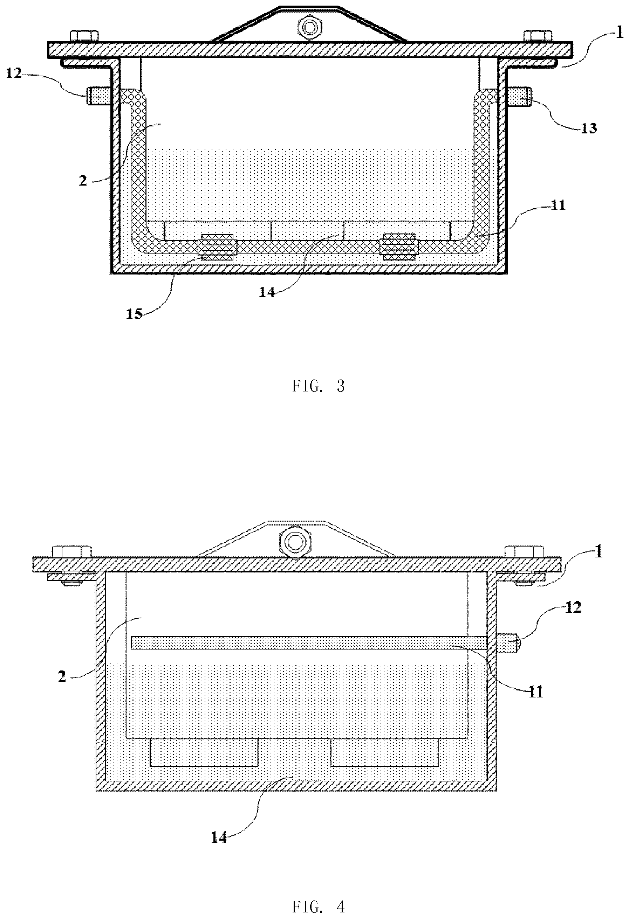

Referring to FIG. 3, the present application provides a battery pack which includes a battery box 1 and a battery module 2. The battery module 2 is disposed in the battery box 1. The battery box 1 is further filled with a filling liquid 14, and the battery module 2 is immersed in the filling liquid 14. The electrode tabs of battery cells are disposed downwards such that the electrode tabs of the battery module 2 are immersed into the filling liquid 14. The filling liquid 14 in the present embodiment is silicone oil.

A cooling pipe 11 is disposed in the battery box 1, and the cooling pipe 11 is filled with a coolant. The melting temperature of sidewall of the cooling pipe 11 is at a preset temperature, and the preset temperature is 130 Celsius degree. The cooling pipe 11 is used for cooling purpose during normal operation of the battery module 2. A heat conduction device 15 is attached to an outer wall of the cooling pipe 11. In the present embodiment, heat conduction fins are used as the heat conduction device 15.

The battery box 1 is provided with an outlet 13 and an inlet 12. The cooling pipe 11 is connected to the outlet 13 and the inlet 12. The coolant is circulated in the cooling pipe 11 to take away the heat of the filling liquid 14 to avoid heat accumulation in the battery box1 to cause damage to the battery box 2. The coolant is stored in a storage tank located outside the battery box 1. The coolant is water.

When thermal runaway happens in the battery module 2, local temperature rises rapidly, the cooling pipe 11 reaches the preset temperature and is melt to form a breach, a large amount of the coolant flows out from the breach to absorb heat by phase change and control the temperature rise of the battery module 2.

### Embodiment 6

Referring to FIG. 3, the present application provides a battery pack which includes a battery box 1 and a battery module 2. The battery module 2 is disposed in the battery box 1. The battery box 1 is further filled with a filling liquid 14, and the battery module 2 is immersed in the filling liquid 14. The electrode tabs of battery cells are disposed downwards such that the electrode tabs of the battery module 2 are immersed into the filling liquid 14. The filling liquid 14 in the present embodiment is hydrofluoroether.

A cooling pipe 11 is disposed in the battery box 1, and the cooling pipe 11 is filled with a coolant. The melting temperature of sidewall of the cooling pipe 11 is at a preset temperature, and the preset temperature is 200 Celsius degree. The cooling pipe 11 is used for cooling purpose during normal operation of the battery module 2. A heat conduction device 15 is attached to an outer wall of the cooling pipe 11. In the present embodiment, heat conduction fins are used as the heat conduction device 15.

The battery box 1 is provided with an outlet 13 and an inlet 12. The cooling pipe 11 is connected to the outlet 13 and the inlet 12. The coolant is circulated in the cooling pipe 11 to take away the heat of the filling liquid 14 to avoid heat accumulation in the battery box1 to cause damage to the battery box 2. The coolant is stored in a storage tank located outside the battery box 1. The coolant is ethylene glycol aqueous solution.

When thermal runaway happens in the battery module 2, local temperature rises rapidly, the cooling pipe 11 reaches the preset temperature and is melt to form a breach, a large amount of the coolant flows out from the breach to absorb heat by phase change and control the temperature rise of the battery module 2.

### Embodiment 7

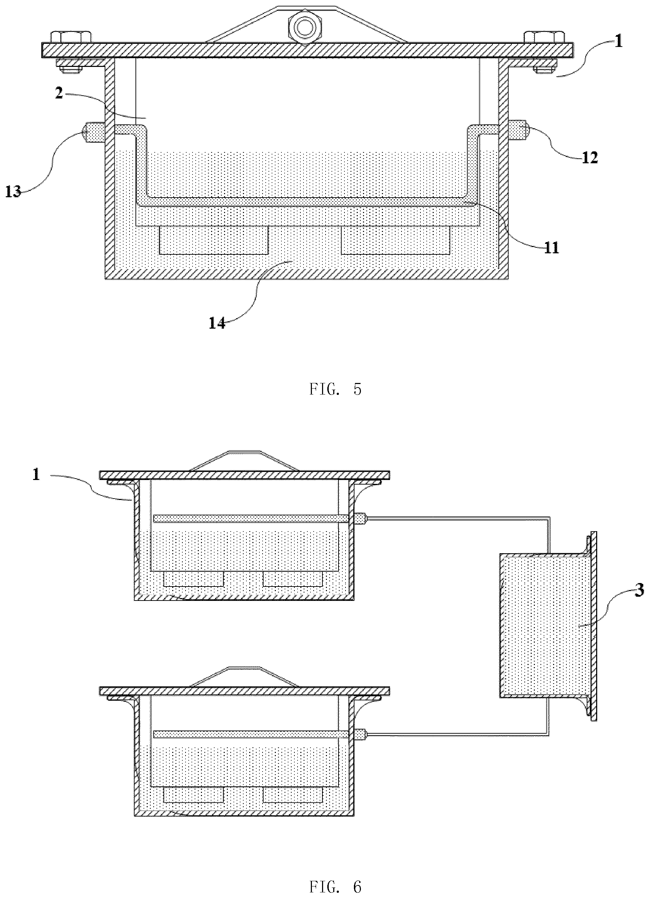

Referring to FIG. 6, the present application provides a battery pack system which includes two battery packs as shown in FIG. 4 and a storage tank 3. The battery pack includes a battery box 1 and a battery module 2. The battery module 2 is disposed in the battery box 1. The battery box 1 is further filled with a filling liquid 14, and the battery module 2 is immersed in the filling liquid 14. The electrode tabs of battery cells are disposed downwards such that the electrode tabs of the battery module 2 are immersed into the filling liquid 14. The filling liquid 14 in the present embodiment is hydrofluoroether.

A cooling pipe 11 is disposed in the battery box 1. The melting temperature of sidewall of the cooling pipe 11 is at a preset temperature, and the preset temperature is 70 Celsius degree. The battery box 1 is provided with an inlet 12. The cooling pipe 11 is a blind pipe having one end being open and the other end being sealed. The open end of the cooling pipe 11 is connected to the inlet 12. The coolant is ethylene glycol aqueous solution.

A storage tank 3 is provided outside the battery box 1, and the storage tank 3 is filled with the coolant. The storage tank 3 is connected to the battery box 1 through pipeline, and is connected to the cooling pipe 11.

When thermal runaway happens in the battery module 2, local temperature rises rapidly, the cooling pipe 11 reaches the preset temperature and is melt to form a breach. The coolant in the storage tank 3 flows into the battery box 1 through the inlet 12 to absorb heat by phase change and control the temperature rise of the battery module 2.

### Embodiment 8

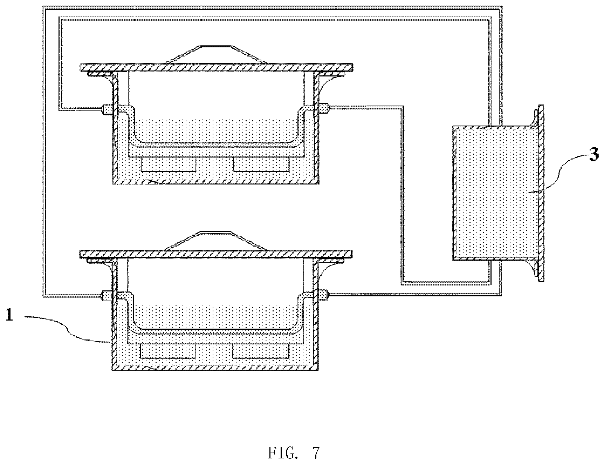

Referring to FIG. 7, the present application provides a battery pack system which includes two battery packs as shown in FIG. 5 and a storage tank 3. The battery pack includes a battery box 1 and a battery module 2. The battery module 2 is disposed in the battery box 1. The battery box 1 is further filled with a filling liquid 14, and the battery module 2 is immersed in the filling liquid 14. The electrode tabs of battery cells are disposed downwards such that the electrode tabs of the battery module 2 are immersed into the filling liquid 14. The filling liquid 14 in the present embodiment is hydrofluoroether.

A cooling pipe 11 is disposed in the battery box 1. The melting temperature of sidewall of the cooling pipe 11 is at a preset temperature, and the preset temperature is 100 Celsius degree. The battery box 1 is provided with an outlet 13 and an inlet 12. The cooling pipe 11 is connected to the outlet 13 and the inlet 12. The coolant is circulated in the cooling pipe 11 to take away the heat of the filling liquid 14 to avoid heat accumulation in the battery box1 to cause damage to the battery box 2. The coolant is ethylene glycol aqueous solution.

A storage tank 3 is provided outside the battery box 1, and the storage tank 3 is filled with the coolant. The storage tank 3 is connected to the battery box 1 through pipeline, and is connected to the cooling pipe 11. The coolant in the storage tank 3 flows along the pipeline, then flows into the cooling pipe 11 through the inlet 12, then flows out from the outlet 13, and finally flows back to the storage tank 3 through the pipeline, to thereby form a complete coolant circulation.

When thermal runaway happens in the battery module 2, local temperature rises rapidly, the cooling pipe 11 reaches the preset temperature and is melt to form a breach. The coolant in the storage tank 3 flows into the battery box 1 through the inlet 12 to absorb heat by phase change and control the temperature rise of the battery module 2.

### Embodiment 9

Referring to FIG. 7, the present application provides a battery pack system which includes two battery packs as shown in FIG. 5 and a storage tank 3. The battery pack includes a battery box 1 and a battery module 2. The battery module 2 is disposed in the battery box 1. The battery box 1 is further filled with a filling liquid 14, and the battery module 2 is immersed in the filling liquid 14. The electrode tabs of battery cells are disposed downwards such that the electrode tabs of the battery module 2 are immersed into the filling liquid 14. The filling liquid 14 in the present embodiment is hydrofluoroether.

A cooling pipe 11 is disposed in the battery box 1. The melting temperature of sidewall of the cooling pipe 11 is at a preset temperature, and the preset temperature is 100 Celsius degree. The battery box 1 is provided with an outlet 13 and an inlet 12. The cooling pipe 11 is connected to the outlet 13 and the inlet 12. The coolant is circulated in the cooling pipe 11 to take away the heat of the filling liquid 14 to avoid heat accumulation in the battery box1 to cause damage to the battery box 2. The coolant is ethylene glycol aqueous solution.

A storage tank 3 is provided outside the battery box 1, and the storage tank 3 is filled with the coolant. The storage tank 3 is connected to the battery box 1 through pipeline, and is connected to the cooling pipe 11. The coolant in the storage tank 3 flows along the pipeline, then flows into the cooling pipe 11 through the inlet 12, then flows out from the outlet 13, and finally flows back to the storage tank 3 through the pipeline, to thereby form a complete coolant circulation.

When thermal runaway happens in the battery module 2, local temperature rises rapidly, the cooling pipe 11 reaches the preset temperature and is melt to form a breach. The coolant in the storage tank 3 flows into the battery box 1 through the inlet 12 to absorb heat by phase change and control the temperature rise of the battery module 2.

## Claims

1. A battery pack comprising a battery box (1) and a battery module (2), the battery module (2) being disposed in the battery box (1), the battery module (2) consisting of a plurality of battery cells, at least one cooling pipe (11) is disposed in the battery box (1), at least a portion of the cooling pipe (11) is configured to melt and form a breach after reaching a preset temperature, wherein the preset temperature is lower than the temperature of thermal runaway of the battery module, the cooling pipe (11) is filled with a coolant, **characterized in that** the battery box (1) is further filled with a filling liquid (14), the battery module (2) is at least partially immersed in the filling liquid (14), the latent heat of vaporization of the coolant is higher than or equal to the latent heat of vaporization of the filling liquid.

2. The battery pack of claim **1,** wherein the preset temperature is in the range from 70 to 150 Celsius degree.

3. The battery pack of claim **1,** wherein a material of the portion of the cooling pipe (11), configured to melt and form a breach, is selected from an alloy with low melting point or a polymer with low melting point, wherein low melting point means a melting point below 200 Celsius degree.

4. The battery pack of claim **3,** wherein the polymer with low melting point is at least one selected from POE, EVA, ABS, PU, PA and CPVC.

5. The battery pack of claim **3,** wherein the alloy with low melting point is at least one selected from Ga, In, Sn, Bi, Pb, Cd and Zn.

6. The battery pack of claim **1,** wherein the filling liquid (14) contains an insulating and flame-retardant liquid having a freezing point lower than -30 Celsius degree and a decomposition temperature higher than 70 Celsius degree.

7. The battery pack of claim **6,** wherein the filling liquid (14) is at least one selected from silicone oil, transformer oil, chlorofluorocarbons, fluorohydrocarbon, chlorohydrocarbon and hydrofluoroether.

8. The battery pack of claim **1,** wherein the phase-transition temperature of the coolant is in the range from 70 to 150 Celsius degree.

9. The battery pack of claim **8,** wherein the coolant is at least one selected from water and aqueous solution.

10. The battery pack of claim **9,** wherein the aqueous solution is selected from aqueous solution of alcohol.

11. The battery pack of claim **10,** wherein the alcohol is at least one selected from ethylene glycol, 1,2-ethylidene glycol, propylene glycol, 1,3-butanediol, hexalene glycol, diethylene glycol, and propanetriol.

12. The battery pack of claim **8,** wherein the coolant is at least one selected from chlorofluorocarbons, fluorohydrocarbon, chlorohydrocarbon, and hydrofluoroether.

13. The battery pack of claim **1,** wherein the cooling pipe (11) is at least partially immersed in the filling liquid (14).

14. The battery pack of claim **1,** wherein the hydraulic pressure of the coolant is higher than the hydraulic pressure of the filling liquid.

15. The battery pack of claim **1,** wherein the battery module (2) is placed upside down in the battery box (1).

16. The battery pack of claim **1,** wherein the battery box (1) is installed with a pressure relief valve.

17. The battery pack of claim **1,** wherein a heat conduction device (15) is attached to an outer wall of the cooling pipe (11).

18. The battery pack of claim **1,** wherein the battery box (1) is provided with an outlet (13) and an inlet (12), two open ends of the cooling pipe are respectively connected to the outlet (13) and the inlet (12), a storage tank (3) is further provided, the storage tank (3) is filled with the coolant, and the storage tank (3) is connected to the inlet (12) and the outlet (13) through pipeline.

19. The battery pack of claim **1,** wherein the battery box (1) is provided with an inlet (12), one open end of the cooling pipe (11) is connected to the inlet (12), and the other end of the cooling pipe (11) is hermetically sealed, a storage tank (3) is further provided, the storage tank (3) is filled with the coolant, and the storage tank (3) is connected to the inlet (12) through pipeline.

## Patentansprüche

1. Akkupack mit einem Batteriekasten (1) und einem Batteriemodul (2), wobei das Batteriemodul (2) im Batteriekasten (1) angeordnet ist, wobei das Batteriemodul (2) aus mehreren Batteriezellen und mindestens einem im Batteriekasten (1) angeordneten Kühlrohr (11) besteht, wobei mindestens ein Teil des Kühlrohrs (11) so gestaltet ist, dass es nach Erreichen einer voreingestellten Temperatur schmilzt und einen Bruch bildet,
wobei die voreingestellte Temperatur niedriger als die thermische Instabilitätstemperatur des Batteriemoduls ist, das Kühlrohr (11) mit einem Kühlmittel gefüllt ist, **dadurch gekennzeichnet, dass** der Batteriekasten (1) weiterhin mit einer Füllflüssigkeit (14) gefüllt ist, das Batteriemodul (2) zumindest teilweise in die Füllflüssigkeit (14) eingetaucht und die latente Verdampfungswärme des Kühlmittels höher oder gleich der latenten Verdampfungswärme der Füllflüssigkeit ist.

2. Akkupack gemäß Anspruch 1,
wobei die voreingestellte Temperatur zwischen 70 und 150 Grad Celsius liegt.

3. Akkupack gemäß Anspruch 1,
wobei der Teil des Kühlrohrs (11), der schmelzen und einen Bruch bilden soll, aus einer Legierung mit niedrigem Schmelzpunkt oder einem Polymer mit niedrigem Schmelzpunkt gefertigt ist,
wobei ein niedriger Schmelzpunkt einen Schmelzpunkt unter 200 °C bedeutet.

4. Akkupack gemäß Anspruch 3,
wobei das Polymer mit niedrigem Schmelzpunkt zumindest einer ist, ausgewählt aus PEOX, EVA, ABS, Polyurethankautschuk, PA und PVC-C.

5. Akkupack gemäß Anspruch 3,
wobei die Legierung mit niedrigem Schmelzpunkt zumindest eine ist, ausgewählt aus Ga, In, Sn, Bi, Pb, Cd und Zn .

6. Akkupack gemäß Anspruch 1,
wobei die Füllflüssigkeit (14) eine isolierende und flammhemmende Flüssigkeit mit einem Gefrierpunkt von unter -30 °C und einer Zersetzungstemperatur von über 70 °C enthält.

7. Akkupack gemäß Anspruch 6,
wobei die Füllflüssigkeit (14) zumindest eine ist, ausgewählt aus Silikonöl, Transformatorenöl, Fluorchlorkohlenwasserstoffe, Fluorkohlenwasserstoff, Chlorkohlenwasserstoff und/oder Hydrofluoroether.

8. Akkupack gemäß Anspruch 1,
wobei die Phasenübergangstemperatur des Kühlmittels zwischen 70 und 150 °C liegt.

9. Akkupack gemäß Anspruch 8,
wobei das Kühlmittel zumindest eines ist, ausgewählt aus Wasser und einer wässrigen Lösung.

10. Akkupack gemäß Anspruch 9,
wobei die wässerige Lösung eine wässerige Alkohollösung ist.

11. Akkupack gemäß Anspruch 10,
wobei der Alkohol zumindest einer ist, ausgewählt aus Ethylenglykol, 1,2-Ethylidenglykol, Propylenglykol, 1,3-Butandiol, Hexylenglykol, Diethylenglykol und Propantriol.

12. Akkupack gemäß Anspruch 8,
wobei das Kühlmittel zumindest eines ist, ausgewählt aus Fluorchlorkohlenwasserstoffen, Fluorkohlenwasserstoff, Chlorkohlenwasserstoff und Hydrofluoroether.

13. Akkupack gemäß Anspruch 1,
wobei das Kühlrohr (11) zumindest teilweise in die Füllflüssigkeit (14) eingetaucht ist.

14. Akkupack gemäß Anspruch 1,
wobei der Hydraulikdruck des Kühlmittels höher ist als der Hydraulikdruck der Füllflüssigkeit.

15. Akkupack gemäß Anspruch 1,
wobei das Batteriemodul (2) im Batteriekasten (1) mit der Oberseite nach unten angeordnet ist.

16. Akkupack gemäß Anspruch 1,
wobei der Batteriekasten (1) mit einem Druckbegrenzungsventil ausgestattet ist.

17. Akkupack gemäß Anspruch 1,
wobei an der Außenwand des Kühlrohrs (11) eine Wärmeleitvorrichtung (15) angebracht ist.

18. Akkupack gemäß Anspruch 1,
wobei der Batteriekasten (1) mit einem Auslass (13) und einem Einlass (12) versehen ist, zwei offene Enden des Kühlrohrs mit dem Auslass (13) bzw. dem Einlass (12) verbunden sind, wobei ferner ein Sammelbehälter (3) vorgesehen ist, wobei der Sammelbehälter (3) mit dem Kühlmittel gefüllt und der Sammelbehälter (3) über eine Rohrleitung mit dem Einlass (12) und dem Auslass (13) verbunden ist.

19. Akkupack gemäß Anspruch 1,
wobei der Batteriekasten (1) mit einem Einlass (12) versehen ist, ein offenes Ende des Kühlrohrs (11) mit dem Einlass (12) verbunden ist und das andere Ende des Kühlrohrs (11) hermetisch verschlossen ist, wobei ferner ein Sammelbehälter (3) vorgesehen, der Sammelbehälter (3) mit dem Kühlmittel gefüllt und der Sammelbehälter (3) über eine Rohrleitung mit dem Einlass (12) verbunden ist.

## Revendications

1. Un bloc-batterie comprenant un compartiment de batterie (1) et un module de batterie (2), le module de batterie (2) se trouvant dans le compartiment de batterie (1), le module de batterie (2) comprenant une pluralité de cellules de batterie, au moins un tuyau de refroidissement (11) se trouve dans le compartiment de batterie (1), une partie au moins du tuyau de refroidissement (11) est conçue pour fondre et former une brèche après avoir atteint une température prédéfinie, dans lequel la température prédéfinie est inférieure à la température d'emballement thermique du module de batterie, le tuyau de refroidissement (11) est rempli d'un liquide de refroidissement, **caractérisé en ce que** le compartiment de batterie (1) est en outre rempli d'un liquide de remplissage (14), le module de batterie (2) est au moins partiellement immergé dans le liquide de remplissage (14), la chaleur latente de vaporisation du liquide de refroidissement est supérieure ou égale à la chaleur latente de vaporisation du liquide de remplissage.

2. Le bloc-batterie selon la revendication 1,
dans lequel la température prédéfinie est dans la plage de 70 à 150 degrés Celsius.

3. Le bloc-batterie selon la revendication 1,
dans lequel un matériau de la partie du tuyau de refroidissement (11), conçue pour fendre et former une brèche, est sélectionné parmi un alliage à bas point de fusion ou un polymère à bas point de fusion,
dans lequel le bas point de fusion signifie un point de fusion inférieur à 200 degrés Celsius.

4. Le bloc-batterie selon la revendication 3,
dans lequel le polymère à bas point de fusion est au moins un sélectionné parmi POE, EVA, ABS, PU, PA et CPVC.

5. Le bloc-batterie selon la revendication 3,
dans lequel l'alliage à bas point de fusion est au moins un sélectionné parmi Ga, In, Sn, Bi, Pb, Cd et Zn.

6. Le bloc-batterie selon la revendication 1,
dans lequel le liquide de remplissage (14) contient un liquide isolant et ignifuge présentant un point de congélation inférieur à -30 degrés Celsius et une température de décomposition supérieure à 70 degrés Celsius.

7. Le bloc-batterie selon la revendication 6,
dans lequel le liquide de remplissage (14) est au moins un sélectionné parmi l'huile de silicone, l'huile de transformateur, les chlorofluorocarbones, le fluorohydrocarbone, le chlorohydrocarbone et l'hydrofluoroéther.

8. Le bloc-batterie selon la revendication 1,
dans lequel la température de transition de phase du liquide de refroidissement est dans la plage de 70 à 150 degrés Celsius.

9. Le bloc-batterie selon la revendication 8,
dans lequel le liquide de refroidissement est au moins sélectionné parmi l'eau et une solution aqueuse.

10. Le bloc-batterie selon la revendication 9,
dans lequel la solution aqueuse est sélectionnée parmi des solutions aqueuses d'alcool.

11. Le bloc-batterie selon la revendication 10,
dans lequel l'alcool est au moins un sélectionné parmi l'éthylène glycol, 1,2-éthylidène glycol, le propylène glycol, 1,3-butanediol, l'héxalène glycol, le diéthylène glycol et le propanetriol.

12. Le bloc-batterie selon la revendication 8,
dans lequel le liquide de refroidissement est au moins sélectionné parmi les chlorofluorocarbones, le fluorohydrocarbone, le chlorohydrocarbone et l'hydrofluoroéther.

13. Le bloc-batterie selon la revendication 1,
dans lequel le tuyau de refroidissement (11) est au moins partiellement immergé dans le liquide de remplissage (14).

14. Le bloc-batterie selon la revendication 1,
dans lequel la pression hydraulique du liquide de refroidissement est supérieure à la pression hydraulique du liquide de remplissage.

15. Le bloc-batterie selon la revendication 1,
dans lequel le module de batterie (2) est placé à l'envers dans le compartiment de batterie (1).

16. Le bloc-batterie selon la revendication 1,
dans lequel le compartiment de batterie (1) est installé avec un clapet de décharge de pression.

17. Le bloc-batterie selon la revendication 1,
dans lequel un dispositif de conduction de chaleur (15) est fixé à une paroi extérieure du tuyau de refroidissement (11).

18. Le bloc-batterie selon la revendication 1,
dans lequel le compartiment de batterie (1) est pourvu d'une sortie (13) et d'une entrée (12), les deux extrémités ouvertes du tuyau de refroidissement sont respectivement raccordées à la sortie (13) et à l'entrée (12), un réservoir de stockage (3) est fourni en outre, le réservoir de stockage (3) est rempli avec le liquide de refroidissement et le réservoir de stockage (3) est raccordé à l'entrée (12) et à la sortie (13) par l'intermédiaire de la canalisation.

19. Le bloc-batterie selon la revendication 1,
dans lequel le compartiment de batterie (1) est pourvu d'une entrée (12), une extrémité ouverte du tuyau de refroidissement (11) est raccordée à l'entrée (12) et l'autre extrémité du tuyau de refroidissement (11) est hermétiquement scellée, un réservoir de stockage (3) est fourni en outre, le réservoir de stockage (3) est rempli avec le liquide de refroidissement et le réservoir de stockage (3) est raccordé à l'entrée (12) par l'intermédiaire de la canalisation.
